# EUROPEAN PATENT SPECIFICATION

(11) **EP 2 950 467 B1**
(45) Date of publication and mention of the grant of the patent: **25.07.2018**
(21) Application number: 14169916.5
(22) Date of filing: 26.05.2014
(51) Int. Cl.: H04B 11/00

(54) **Acoustic data transmission system**
Akustikdatenübertragungssystem
Système de transmission de données acoustiques

(43) Date of publication of application: 02.12.2015
(73) Proprietor: Pepperl + Fuchs GmbH, 68307 Mannheim (DE)
(72) Inventor: Kaindl, Thomas, 69117 Heidelberg (DE)
(74) Representative: Banse & Steglich Patentanwälte PartmbB

(56) References cited:
- GB-A- 2 495 735
- US-A- 5 412 620
- US-A1- 2006 193 270
- US-B1- 6 392 960
- HAIYING HUANG ET AL: "Broadband electrical impedance matching for piezoelectric ultrasound transducers", IEEE TRANSACTIONS ON ULTRASONICS, FERROELECTRICS AND FREQUENCY CONTROL, IEEE, US, vol. 58, no. 12, 1 December 2011 (2011-12-01), pages 2699-2707, XP011402212, ISSN: 0885-3010, DOI: 10.1109/TUFFC.2011.2132

## Description

### Technical field

The present invention relates to acoustic data transmission, particularly multi-carrier data communication via an acoustic transmission channel. Furthermore, the present invention relates to acoustic receiving devices with a sonic transducer to receive and to process multi-carrier acoustic signals, particularly in orthogonal frequency division multiplex OFDM manner.

### Related art

Apart from the standard electromagnetism-based data transmission systems in air, acoustic (i.e. sonic) data transmission systems are available. Acoustic transmission systems rely on acoustic transducers for emitting and/or receiving sound waves. Particularly, conventional microphones and loudspeakers are common in acoustic data transmission systems. Furthermore, for ultrasonic data transmission systems conventional piezoelectric ultrasound transducers may be applied.

Document US 6,950,681 B2 discloses an ultrasonic data transmission system in which a signal to be transmitted is code-spreaded to obtain a broadband signal by means of a CDMA technique. The signal is emitted via a loudspeaker and received by an ultrasonic microphone. The loudspeaker and the microphone need to have a broadband characteristic.

Also from document US 8,185,100 B2, it is disclosed a communication system using an acoustic data channel. The receiving unit for receiving the acoustic data transmission is configured to receive a broadband audio signal which is then demodulated and de-spreaded.

Document EP 1 205 045 D1 discloses a system for transmitting signals via an acoustic data transmission channel wherein signals to be transmitted are spreaded and emitted by means of an electroacoustic transducer. A further electroacoustic transducer is provided for receiving and for converting the acoustic signal into an electric signal. The electric signal is decoded by despreading in order to regenerate the data signal.

Document US 5,539,705 A discloses an acoustic communication system which transmits audio signals which are FM-modulated on a single carrier frequency.

Acoustic data communication may be based on modulation schemes also known for electromagnetic data transmission systems. Such modulation schemes use a single carrier frequency for data transmission and include phase-shift keying (PSK), amplitude-shift keying (ASK), frequency modulation and the like. Moreover, frequency-shift keying (FSK) is known for acoustic data transmission systems which may use different carrier frequencies for data transmission wherein only one carrier frequency is active for transmitting data at a time. Therefore, the spectral efficiency of frequency-shift keying is relatively low.

From document US 7,796,978 B2, a sonic communication system is disclosed, wherein the acoustic-signal conveying a data signal comprises an audio signal in which said data signal is encoded. The data signal is encoded as a wideband data signal within a plurality of channels of a media broadcast or other public broadcast so that a main band of the spectrum of the wideband data signal lies within a given frequency band, such as below 5 kHz. The wideband data signal is decoded to recover the data signal. The modulation scheme corresponds to phase-shift keying (PSK).

From document Hai Yan et al., "DSP Implementation of SISO and MIMO OFDM Acoustic Modems", The Underwater Sensor Network Lab, University of Connecticut, Storrs, CT06269 discloses the use of orthogonal frequency division multiplexing (OFDM) for high data rate transmission in short distance underwater acoustic communications. The transmission system applied has two acoustic sound-emitting transducers and two acoustic receiving transducers that are used for providing two separate transmission channels wherein the pilot subcarriers are divided into two non-overlapping sets with each data stream assigned to one set of uniformly distributed pilot subcarriers.

From documents A, Oralkan et al., "Capacitive Micromachined Ultrasonic Transducers: Next-Generation Arrays for Acoustic Imaging?", IEEE Transactions on Ultrasonics, Ferroelectrics and Frequency Control, Vol. 49, No. 11, pages 1596-1610, 2002, and G. Caliano et al., "cMUT Sensor for Applications as a Wideband Acoustic Receiver in the MHz Range", 2010 IEEE Ultrasonics Symposium, pages 1869-1872, discloses capacitive micromachined ultrasonic transducers having wideband characteristics. The cMUTs are designed to operate below the resonance frequency which enables higher bandwidths. However, the damping below the resonance frequency is higher and the cMUTs need to be powered by relatively high voltages.

For the acoustic transmission systems in the ultrasonic regime, the use of piezoelectric transducers is generally appreciated, since piezoelectric transducers have a high-quality factor and can provide high sound ratio levels at relatively low voltages. However, the usable bandwidth is small and therefore substantially enables only narrow-bandwidth data transmission.

While piezoelectric transducers usually have a series and parallel resonance characteristics in typical applications merely parallel resonance is used and the damping is reduced by a high input impedance.

Document US 2006/193270 A1 discloses an acoustic transducer arrangement having a receiver assembly comprising one or more acoustic receivers formed by piezoelectric elements. The acoustic receivers are coupled with a frequency filter arrangement which includes a static filter that blocks frequencies below the selected ultrasound range and a frequency subdivider unit. Furthermore, the frequency filter arrangement is coupled with a control unit. The control unit is configured to receive the filtered digital data streams and stores them in a PCM format. A FFT is applied on the stored data to obtain a frequency map indicative of which frequency represents digital "0" and "1" values.

Document HAIYING HUANG ET AL: "Broadband electrical impedance matching for piezoelectric ultrasound transducers", IEEE TRANSACTIONS ON ULTRASONICS, FERROELECTRICS AND FREQUENCY CONTROL, IEEE, US. Vol. 58, no. 12. December 1, 2011, pages 2699-2707, ISSN: 0885-3010 discloses a method for designing broadband electrical impedance matching networks for piezoelectric ultrasound transducers. The method accounts for multiple resonances of ultrasound transducers and provides a method for matching an impedance of an acoustic transducer.

It is an object of the present invention to provide an acoustic data transmission system which is based on a multi-channel data transmission using narrow-band acoustic transducers. Furthermore, it is an object of the present invention to provide an acoustic receiving device which can be easily matched for receiving an acoustic data stream containing multiple carrier frequencies.

### Summary of the invention

The above objects have been achieved by the acoustic receiving device for receiving a multi-channel acoustic data stream according to claim 1, a transmission system for performing an acoustic data transmission and a method for processing a multi-channel data stream received by an acoustic receiving device according to the further independent claims.

Further embodiments are indicated in the depending subclaims.

According to a first aspect, an acoustic receiving device for receiving multichannel acoustic transmission data in an acoustic data transmission system is provided, comprising:
- an acoustic transducer having multiple resonance frequencies for receiving acoustic transmission data containing multiple sub data streams each modulated onto a respective carrier frequency and for providing an input data stream related thereto;
- a matching means configured to perform a normalization so that the signal strengths of each signal portion representing one of the sub data streams in the input data stream are made substantially equal for demodulation of the multiple sub data streams; and
- means for processing the normalized data stream with respect to the multiple carrier frequencies to obtain an output data stream.

Furthermore, the acoustic transducer may comprise a piezoelectric transducer having at least one series and at least one parallel resonance.

For acoustic data transmission applications piezoelectric transducers are generally preferable with respect to their high-quality factor and high sound pressure levels at low voltages. However, piezo-electric transducers provide a very narrow bandwidth so that at a first glance multiple carrier modulation schemes are deemed as not appropriate to be applied with a single piezo-electric transducer on the transmitting and/or receiving side of data transmission applications.

The above receiving device makes use of the specific electrical characteristics of an acoustic transducer having multiple resonances, such as a series and parallel resonance of a piezo-electric transducer which provides two unique resonance frequencies. So signal portions of an acoustic signal received by the above acoustic transducer experience a low attenuation at one of its resonance frequency and a substantially increased attenuation at frequencies deviating from the respective resonance frequency.

When applying modulation schemes for a multiple carrier (multichannel) data transmission, such as Differential Quadrature Phase-Shift Keying (DQPSK), quadrature amplitude modulation (QAM) or the like, the received acoustic signals transmitted over the multiple channels need to be provided as a corresponding number of sub data streams each having the same signal strength to allow a proper decoding of the received data streams.

For decoding the received data stream, it is necessary that the signal strengths of each of the sub data streams are equal. This may be achieved by matching the received sub data streams.

The above receiving device applies a matching of the signal strengths of each signal portion representing one of the sub data streams in the input data stream for demodulation of the multiple sub data streams. Hence, a piezoelectric transducer can be used as a single receiving transducer for multiple carrier data transmission.

The above acoustic receiving device for a transmission system can be applied in systems for a precise time of arrival measurements, such as localization systems, distance measurement and positioning systems. Furthermore, it can be applied in environments which shall be free of electromagnetic radiation.

According to an embodiment, the matching means may include a matching circuit being configured to modify a transfer function applied onto the received acoustic transmission data to provide a matched input data stream so that for each signal portion representing one of the sub data streams the same signal strength is obtained.

The matching can be performed by adapting the transfer function of the piezoelectric transducer, i.e. that is applied onto the received acoustic transmission data, so that the carrier frequency corresponds to or is close to the series and parallel resonance frequencies of the acoustic transducer. Hence, a matching circuit is provided to shift at least one of the resonance frequencies of the acoustic transducer with respect to the given carrier frequencies to modify the gain/attenuations of the multiple sub data streams at the carrier frequencies. The acoustic transducer may be matched so that mismatches of the signal strengths of the sub data streams in the received acoustic signal can be compensated, once the sub data streams are separated by correlation with each of the carrier frequencies. The relative phases of the received sub-data streams are subtracted from each other. The phase is unwrapped and the constant linear part is subtracted from the phase difference. The synchronization time is the time where the unbiased phase difference crosses zero or the absolute value has its minimum or the phase difference has its minimum variance.

The use of a matching circuit for matching the signal strengths (gains/attenuations) of the sub data streams of the (analog) acoustic transmission data is further beneficial as the dynamic range of a downstream analog-digital converter to which the received signal stream is applied, does not need to be extended. The adaptation of the resonance frequencies of the transducer thereby minimizes the cross-talk of information between the carrier frequencies. The interference between the transmission channel is the higher, the less the amplitudes of the received sub-data signals are matched.

It may be provided that the matching circuit comprises a resistance connected in parallel to the transducer.

Moreover, the matching circuit may be further configured so that the transfer function has its resonances at or close to the multiple carrier frequencies.

According to an embodiment the means for processing may comprise:
- an analog digital converter to provide a digitalized input data stream based on the input data stream and;
- a receiver processing unit for performing a decoding based on the digitalized input data stream with respect to the multiple carrier frequencies of the acoustic transmission data to obtain the output data stream;.

It may be provided that the matching means comprises a normalization stage for normalization of the digitalized input data stream so that the signal strength of each sub data stream in the input data stream is made substantially equal for demodulation of the multiple sub data streams.

According to a further aspect an acoustic data transmission system is provided, comprising:
- an acoustic transmitting device for encoding a transmission data stream onto multiple channels each associated with a unique carrier frequency and for emitting multichannel acoustic transmission data containing a plurality of superimposed sub transmission sound signals each associated to one channel;
- the above acoustic receiving device.

According to a further aspect a method for processing multichannel acoustic transmission data in an acoustic receiving device is provided, comprising the steps of:
- receiving acoustic transmission data containing multiple sub data streams each modulated onto a respective carrier frequency and providing an input data stream related thereto by means of an acoustic transducer having multiple resonance frequencies;
- performing a normalization so that the signal strengths of each signal portion representing one of the sub data streams in the input data stream are made substantially equal for demodulation of the multiple sub data streams; and
- processing the normalized data stream with respect to the multiple carrier frequencies to obtain an output data stream.

It may be provided that the acoustic transmission data contains multiple sub data streams each modulated onto a respective carrier frequency and that a time of arrival or a time difference of arrivals of the transmission data or of individual sub data streams are tracked.

### Brief description of the drawings

Embodiments are described in more detail in conjunction with the accompanying drawings in which:
- Figure 1: schematically shows an acoustic transmission system for multi-channel signal transmission;
- Figure 2: shows an equivalent circuit of a piezoelectric transducer;
- Figure 3: shows a characteristic of the impedance characteristic of the acoustic transducers of the receiver device over frequency;
- Figure 4: shows a diagram indicating the normalized strength of the signal portions at the first and second carrier frequencies;
- Figure 5: shows a diagram comparing the characteristics of the signal strengths at different frequencies resulting by a matched and an unmatched piezoelectric transducer;
- Figure 6: shows a further embodiment of a receiving device for an acoustic transmission system.

### Description of embodiments

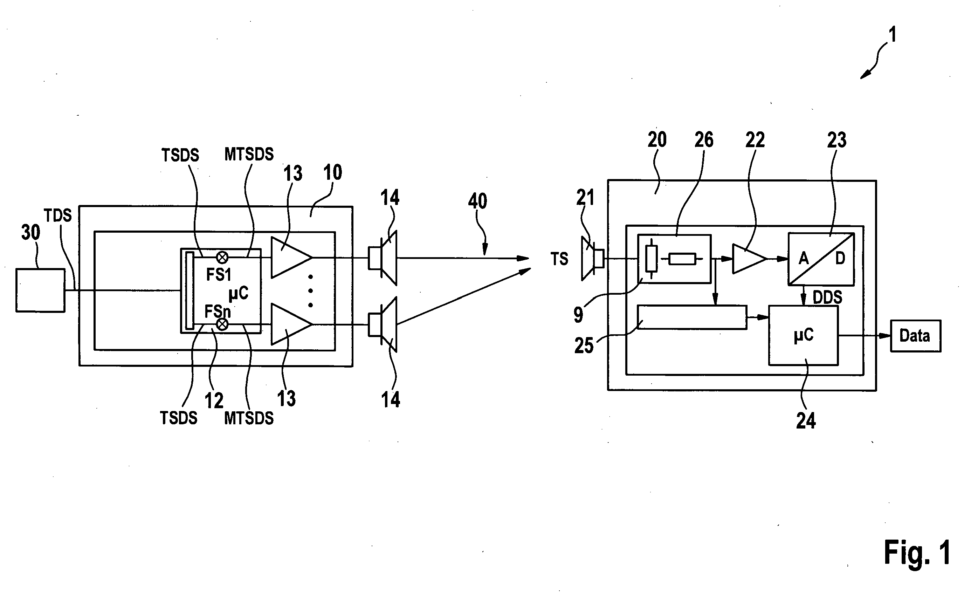

Figure 1 schematically shows a block diagram of an acoustic communication system 1 with an acoustic transmitting device 10 and an acoustic receiving device 20. Data externally provided by a data source 30 is provided as a transmission data stream TDS, e.g. a binary data stream, to a processing unit 12 in which the transmission data stream TDS to be transmitted is split into a number of transmission sub-data streams TSDS each associated with a unique carrier frequency.

In the processing unit 12, each of the split transmission sub-data streams TSDS is encoded or modulated onto the respective associated carrier frequency provided as fixedly set orthogonal frequency signals FS1 ... FSn. Possible modulation schemes can be e.g. Differential Quadrature Phase-Shift Keying (DQPSK), quadrature amplitude modulation (QAM), Binary Shift Keying (BPSK) or the like. The resulting modulated transmission sub data streams MTSDS are each converted to a corresponding analog signal (by means of a respective digital to analog converter DAC or a respective Pulse Width Modulation) and supplied via a respective power amplifier 13 to a respective acoustic transmitting transducer 14. The acoustic transmitting transducers 14 should be selected to have optimal output characteristics with respect to the associated carrier frequency of the respectively supplied modulated transmission sub data stream MTSDS.

Preferably, the acoustic transmitting transducers 14 may be ultrasonic transducers, such as piezoelectric transducers.

In the further described embodiment, the acoustic transmitting device 10 splits the transmission data stream in two transmission sub-data streams TSDS for a two channel transmitting device with carrier frequencies of e.g. 39 kHz and e.g. 41 kHz. Also other carrier frequencies could be selected. For example the acoustic transmitting transducers 14 which are associated to the two resulting modulated transmission sub data streams MTSDS have resonance frequencies at or close to 39 kHz and 41 kHz, respectively.

Each of the acoustic transducers 14 emits ultrasound signals as sub transmission sound signals corresponding to the respective modulated transmission sub data stream MTSDS via a transmission channel 40 onto or to be received by a single acoustic receiving transducer 21 of the acoustic transceiver 20 as a transmission sound signal TS . The transmission sound signal TS is a signal which is formed by the superimposed sub transmission sound signals emitted by the multiple acoustic transmitting transducers 14.

The received transmission sound signal TS is received by the single acoustic transducer 21 and a corresponding input data stream is supplied to a (low-noise) amplifier 22 which adapts the voltage span of the received transmission signal to the input voltage range of an analog-digital converter 23.

The analog-digital converter 23 is configured to digitalize the amplified received transmission signal to a digitalized data stream DDS. The sampling of the amplified received transmission signal may be triggered with respect to the signal strength of the received signal measured by a signal strength measuring unit 25.

At an output of the analog-digital converter 23, the digitalized data stream DDS is provided which is supplied to a receiver processing unit 24, e.g. a microcontroller, a DSP or a customized circuit, acting as a means for processing. The receiver processing unit 24 is configured to process the received digitalized data stream DDS.

In the receiver control unit 24, a synchronization is performed which is based on each symbol within a received data frame of the digitalized data stream DDS. The digitalized data stream DDS is firstly separated into a number of sub data streams corresponding to the number of transmission channels, e.g. in the orthogonal frequency division multiplex. The sub data streams are correlated with each reference carrier frequency used for modulation of the transmission data stream. The relative phases of the so obtained correlated sub-data streams are subtracted from each other to obtain a differential phase. The differential phase is unwrapped and the constant linear part is subtracted from the phase difference to obtain the received data stream. The synchronization is performed at an instant where the unbiased phase difference crosses zero or the absolute value has its minimum or the phase difference has its minimum variance.

To correlate the digitalized data stream with the given reference carrier frequencies, it is necessary that the digitalized data stream DDS includes or respectively represents all (both) received sub-data streams with the same signal strength. In other words the strengths of the signal portions of the sub data streams shall be the same or substantially the same and have therefore to be normalized.

The normalization of the strength of the signal portions is required to reduce or eliminate cross-talk between the information of the two sub-data streams included in the digitalized data stream DDS provided by the analog-digital converter 23. Non-matched signal strengths will result in a higher general interference, and the result of the correlation between the phases is prone to errors.

Particularly, as a single transducer 21 is used in the receiver device 20 to receive multiple superimposed sub transmission sound signals in the transmission data stream TS it is likely that the superimposed sub transmission sound signals received experience different attenuations along the transmission channel 40 and different gains in the receiving acoustic transducer 21, in the amplifier 22 etc.. Hence there is a need to provide means to ensure that the signal strengths of the sub transmission sound signals can be made equal.

Preferably, as the acoustic transducer 21 a transducer is applied which has multiple resonances (resonance frequencies) in its transfer function. In other words, the acoustic transducer is selected which has low gain characteristics at multiple resonance frequencies. In the described embodiment , a piezoelectric transducer is used which provides advantages in terms of a high-quality factor, high sound pressure levels, low cost and high availability.

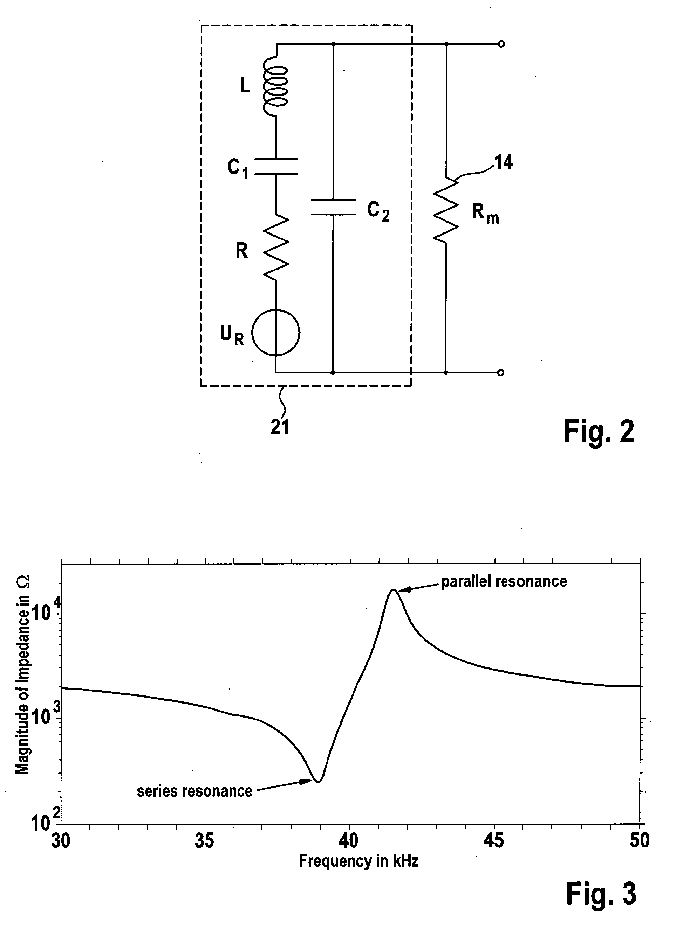

The equivalent circuit of the piezoelectric transceiver is based on the Butterworth-van Dyke model which is shown in Figure 2. It can be seen that the piezoelectric transducer 21 will provide a series and parallel resonance characteristics with one series resonance frequency and one parallel resonance frequency.

In detail, the equivalence circuit provides a series connection of an inductance L, a first capacity C1, a resistance R and a voltage source U_{R}. Parallel to this series connection, a second capacity C₂ is connected. It is clear that the series resonance circuit is provided by the inductance L, the first capacity C1, the resistor R and the voltage source U_{R} and the parallel resonance is provided by the inductance L and the second capacity C2.

In Figure 3, the impedance characteristic of the acoustic transducers 21 over the frequency is shown. It can be seen that the piezoelectric transducer 21 provides a series resonance at a first frequency f₁ and a parallel resonance at a second frequency f₂. Furthermore, it can be seen that close to the resonance frequencies, the change of the impedance per unit change of the frequency is high.

By means of the matching circuit 26, which may be coupled between the piezoelectric transducer 21 and the amplifier 22, it can be achieved that the sub transmission sound signals associated to its carrier frequencies each having the same signal strength. In other words, for the embodiment described above the signal portion at the first carrier frequency shall be equal the signal portion at the second carrier frequency at the input side of the analog digital converter 23. By applying the matching circuit 26, the serial and/or parallel resonance frequencies and/or the gain of the piezoelectric transducer 21 can be shifted or adapted so that the signal strength of the signal portions at the carrier frequencies are equal. For instance, by selecting or adapting the piezoelectric transducer 21 having a series resonance frequency which corresponds to the first carrier frequency or to any frequency close thereto and having a parallel resonance frequency which corresponds to the second carrier frequency or to a frequency close thereto, the matching circuit 26 may comprise or consist of a matching resistor Rm connected in parallel to the acoustic transducer 21. So the matching resistor Rm interacts with the second capacity C2 of the equivalence circuit so that substantially the parallel resonance frequency can be adapted/shifted thereby while the series resonance frequency substantially remains unaffected. The shifting is performed so that the signal portion at the second carrier frequency has a strength which corresponds to the strength of the signal portion at the first carrier frequency.

When using a parallel matching resistor Rm as the matching circuit 26, a high value of the matching resistor Rm causes higher amplitudes for signals received close to the parallel resonance frequency, while lower resistance values of the matching resistor Rm result in lower amplitudes of the signal portion at the second carrier frequency close to the parallel resonance frequency.

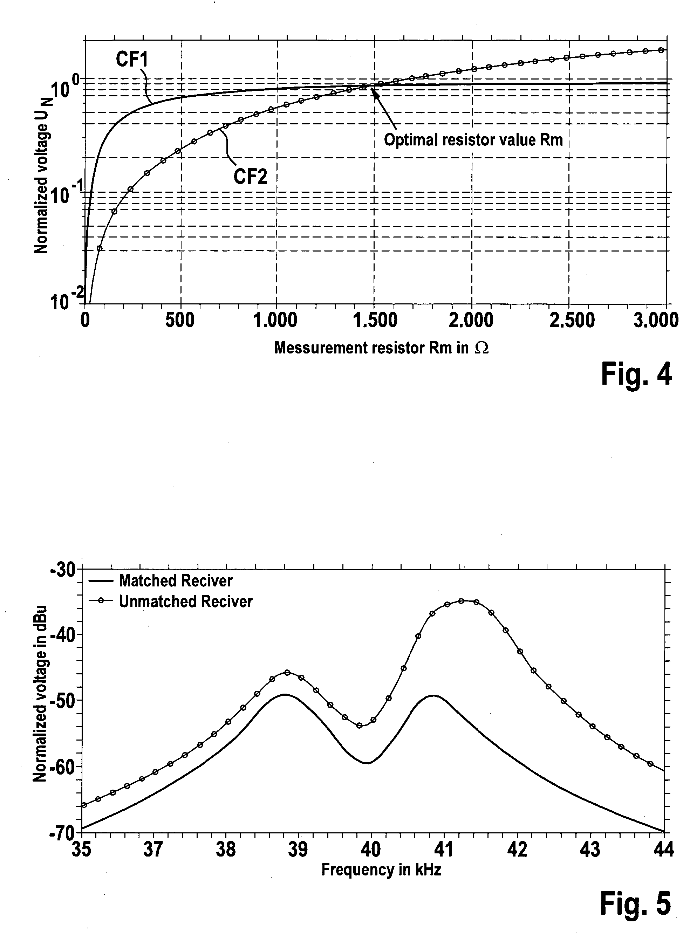

Figure 4 shows a diagram indicating the normalized strength (normalized voltage) of the signal portions at the first CF1 and second carrier frequencies CF2 over the resistance of the matching resistor Rm. It can be seen that only the signal portion at the second carrier frequency disclosed to the parallel resonance frequency substantially changes over the resistance, while the signal portion at the first carrier frequency which is chosen to be at or close to the series resonance frequency remains constant over a broad range of resistances. The ideal match is achieved when the signal strengths of both signal portions at the two carrier frequencies are equal.

In Figure 5, it can be seen a comparison between the signal strength at different frequencies resulting from a matched and an unmatched piezoelectric transducer. For the matched piezoelectric transducer 21 it can be seen that the signal strengths for each signal portion at or close to the exemplary first and second carrier frequencies of 39kHz and 41 kHz can be selected at or very close to the series and parallel resonance frequencies of the piezoelectric transducer 21 while having the same gain factor so that the received signal portions (presuming that the signal portions have been detected by the piezoelectric transducer 21 with the same strength) can be made equal in strength. For the demodulation in the receiver processing unit, this allows to correlate the received digitalized data stream with the provided carrier frequency signal which corresponds to the transmission carrier frequency.

The introduction of the matching circuit 26 provides degrees of freedom to adapt the signal strengths of the signal portions at the multiple carrier frequencies to be equal. The matching should consider following aspects:
- The resonance frequency of the transfer function of the matched receiving transducer shall be at or close to the multiple carrier frequencies to obtain a high gain;
- The signal portions associated with the multiple carrier frequencies should be available at the input of the analog digital converter 23 with the same signal strengths.

Substantially, for a case of two signal portions according to the embodiment above, this can be achieved by selecting the piezoelectric transducer 21 so that the series resonance frequency of its transfer function is at the first (lower) carrier frequency of the transmission signal and the parallel resonance frequency of its transfer function is higher than the second (higher) carrier frequency of the transmission signal and applying a parallel matching resistor as matching circuit 26 to shift the parallel resonance of the combined transfer function of the matched transducer towards the second carrier frequency.

Similarly, for a case of two signal portions according to the embodiment above, this might be also achieved by selecting the piezoelectric transducer 21 so that the parallel resonance frequency of its transfer function is at the second (higher) carrier frequency of the transmission signal and the series resonance frequency of its transfer function is higher than the first (lower) carrier frequency of the transmission signal and applying a series matching resistor (connected in series with the piezoelectric transducer 21 as matching circuit 26 to shift the series resonance of the combined transfer function of the matched transducer towards the first carrier frequency.

Furthermore, more complex matching circuits can be thought of which have effect on multiple resonance frequencies of the transfer function of the matched piezoelectric transducer 21 and the gains at or close the resonance frequencies.

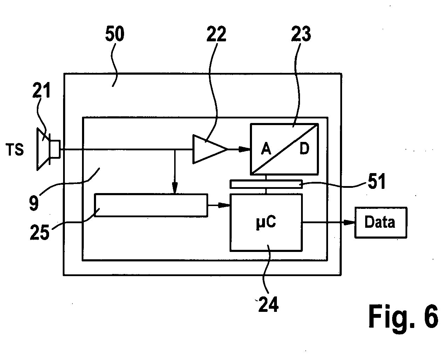

In Figure 6, a further embodiment of a receiving device 50 is shown. In difference to the receiving device 20 of Figure 1, no analog matching circuit is provided between the acoustic transducer 21 and the amplifier 22. Instead, the normalization of the signal portions at the different carrier frequencies is performed at a normalization stage 51 connected to the output of the analog-digital converter 23 so as to provide a normalization of the signal strengths of the signal portions at the multiple carrier frequencies. The normalization stage 51 can be provided separately or integrally with the receiver processing unit 24 and can perform the normalization in a hardwired or software controlled manner.

However, performing the analog matching between the piezoelectric transducer 21 and the amplifier 22 has the advantage that the dynamic range of the analog-digital converter 23 can be low, as the signal strengths of the signal portion are equal or close to equal. When the signal strengths of the signal portions at the carrier frequencies in the receiver unit of Figure 6 are different, the dynamic range of the analog-digital converter 23 has to be adapted to provide a higher resolution to also detect the signal portion with the lower signal strength with a required resolution.

## Claims

1. Acoustic receiving device (20) for receiving multichannel acoustic transmission data in an acoustic data transmission system, comprising:
- an acoustic transducer (21) having multiple resonance frequencies for receiving acoustic transmission data containing multiple sub data streams each modulated onto a respective carrier frequency and for providing an input data stream;
- a matching means (26, 51) configured to perform a normalization so that the signal strengths of each signal portion representing one of the sub data streams in the input data stream are made substantially equal for demodulation of the multiple sub data streams; and
- means for processing (24) the normalized data stream with respect to the multiple carrier frequencies to obtain an output data stream.

2. Acoustic receiving device (20) according to claim 1, wherein the acoustic transducer (21) comprises a piezoelectric transducer having a series and parallel resonance.

3. Acoustic receiving device (20) according to claim 1 or 2, wherein the matching means (26) include a matching circuit (26) being configured to modify a transfer function applied onto the received acoustic transmission data to provide a matched input data stream so that for each signal portion representing one of the sub data streams the same signal strength is obtained.

4. Acoustic receiving device (20) according to claim 3, wherein the matching circuit (26) comprises a resistance connected in parallel to the acoustic transducer (21).

5. Acoustic receiving device (20) according to claim 1 to 4, wherein the matching circuit (26) is further configured so that the transfer function has its resonances at or close to the multiple carrier frequencies.

6. Acoustic receiving device (20) according to any of the claims 1 to 5, wherein the means for processing (23, 24) comprises:
- an analog digital converter (23) to provide a digitalized input data stream based on the input data stream, and/or
- a receiver processing unit (24) for performing a decoding based on the digitalized input data stream with respect to the multiple carrier frequencies of the acoustic transmission data to obtain the output data stream.

7. Acoustic receiving device (20) according to claim 6, wherein the matching means comprises a normalization stage for normalization of the digitalized input data stream so that the signal strength of each sub data stream in the input data stream is made substantially equal for demodulation of the multiple sub data streams.

8. Acoustic receiving device (20) according to any of the claims 1 to 7, wherein the means for processing (23, 24) apply a demodulation scheme which includes one of Differential Quadrature Phase-Shift Keying (DQPSK), quadrature amplitude modulation (QAM), and Binary Shift Keying (BPSK).

9. Acoustic data transmission system (1), comprising:
- an acoustic transmitting device (10) for encoding a transmission data stream onto multiple channels each associated with a unique carrier frequency and for emitting multichannel acoustic transmission data containing a plurality of superimposed sub transmission sound signals each associated to one channel;
- an acoustic receiving device (20) according to any of the claims 1 to 8.

10. Method for processing multichannel acoustic transmission data in an acoustic receiving device (20), comprising the steps of:
- receiving acoustic transmission data containing multiple sub data streams each modulated onto a respective carrier frequency and providing an input data stream by means of an acoustic transducer having multiple resonance frequencies;
- performing a normalization so that the signal strengths of each signal portion representing one of the sub data streams in the input data stream are made substantially equal for demodulation of the multiple sub data streams; and
- processing the normalized data stream with respect to the multiple carrier frequencies to obtain an output data stream.

11. Method according to claim 10 wherein a transfer function applied onto the received acoustic transmission data is modified to provide a matched input data stream so that for each signal portion representing one of the sub data streams the same signal strength is obtained.

## Patentansprüche

1. Akustische Empfangsvorrichtung (20) zum Empfangen von mehrkanaligen akustischen Übertragungsdaten in einem akustischen Datenübertragungssystem, umfassend:
- einen akustischen Wandler (21) mit mehreren Resonanzfrequenzen zum Empfangen von akustischen Übertragungsdaten, die mehrere Unterdatenströme enthalten, die jeweils auf eine bestimmte Trägerfrequenz moduliert sind, und zum Bereitstellen eines Eingangsdatenstroms;
- eine Anpassungseinrichtung (26, 51), die ausgebildet ist, um eine Normalisierung auszuführen, so dass die Signalstärken jedes Signalanteils, der jeweils einen der Unterdatenströme in dem Eingangsdatenstrom repräsentiert, im Wesentlichen zur Demodulation der mehreren Unterdatenströme angeglichen wird; und
- eine Einrichtung zum Verarbeiten (24) des normalisierten Datenstroms mit Bezug auf die mehreren Trägerfrequenzen, um einen Ausgangsdatenstrom zu erhalten.

2. Akustische Empfangsvorrichtung (20) nach Anspruch 1, wobei der akustische Wandler (21) einen piezoelektrischen Wandler mit einer Serien- und Parallelresonanz umfasst.

3. Akustische Empfangsvorrichtung (20) nach Anspruch 1 oder 2, wobei die Anpassungseinrichtung (26) eine Anpassungsschaltung (26) umfasst, die ausgebildet ist, um eine Übertragungsfunktion, die auf die empfangenen akustischen Übertragungsdaten angewendet wird, zu modifizieren, um einen angepassten Eingangsdatenstrom so bereitzustellen, dass für jeden Signalanteil, der einen der Unterdatenströme repräsentiert, die gleiche Signalstärke erhalten wird.

4. Akustische Empfangsvorrichtung (20) nach Anspruch 3, wobei die Anpassungsschaltung (26) einen Widerstand umfasst, der parallel zu dem akustischen Wandler (21) verbunden ist.

5. Akustische Empfangsvorrichtung (20) nach einem der Ansprüche 1 bis 4, wobei die Anpassungsschaltung (26) weiterhin so ausgebildet ist, dass die Übertragungsfunktion ihre Resonanzen bei oder nahe der mehreren Trägerfrequenzen aufweist.

6. Akustische Empfangsvorrichtung (20) gemäß einem der Ansprüche 1 bis 5, wobei die Einrichtung zum Verarbeiten (23, 24) umfasst:
einen Analog-/Digitalwandler (23), um einen digitalisierten Eingangsdatenstrom abhängig von dem Eingangsdatenstrom bereitzustellen, und/oder eine Empfängerverarbeitungseinheit (24) zum Ausführen einer Decodierung abhängig von dem digitalisierten Eingangsdatenstrom mit Bezug auf die mehreren Trägerfrequenzen der akustischen Übertragungsdaten, um den Ausgangsdatenstrom zu erhalten.

7. Akustische Empfangsvorrichtung (20) nach Anspruch 6, wobei die Anpassungseinrichtung eine Normalisierungsstufe zur Normalisierung des digitalisierten Eingangsdatenstroms umfasst, so dass die Signalstärke jedes Unterdatenstroms in dem Eingangsdatenstrom im Wesentlichen zur Demodulation der mehreren Unterdatenströme angeglichen ist.

8. Akustische Empfangsvorrichtung (20) gemäß einem der Ansprüche 1 bis 7, wobei die Einrichtung zur Verarbeitung (23, 24) ein Demodulationsschema verwendet, das eines von Differential Quadrature Phase-Shift Keying (DQPSK), Quadrature Amplitude Modulation (QAM) und Binary Phase Shift Keying (BPSK) umfasst.

9. Akustikdatenübertragungssystem (1) umfassend:
- eine akustische Übertragungsvorrichtung (10) zum Codieren eines Übertragungsdatenstroms auf mehrere Kanäle, die jeweils einer eindeutigen Trägerfrequenz zugeordnet sind und zum Ausgeben von mehrkanaligen akustischen Übertragungsdaten, die eine Mehrzahl von überlagerten jeweils einem Kanal zugeordneten Unterübertragungsakustiksignalen enthalten;
- eine akustische Empfangsvorrichtung (20) nach einem der Ansprüche 1 bis 8.

10. Verfahren zum Verarbeiten von mehrkanaligen akustischen Übertragungsdaten in einer akustischen Empfangsvorrichtung (20), umfassend die Schritte:
- Empfangen von akustischen Übertragungsdaten, die mehrere Unterdatenströme enthalten, die jeweils auf eine bestimmte Trägerfrequenz moduliert sind und einen Eingangsdatenstrom bereitstellen, mithilfe eines akustischen Wandlers mit mehreren Resonanzfrequenzen;
- Ausführen einer Normalisierung, so dass die Signalstärken jedes Signalanteils, der einen der Unterdatenströme in dem Eingangsdatenstrom repräsentiert, im Wesentlichen zur Demodulation der mehreren Unterdatenströme angeglichen werden; und
Verarbeiten des normalisierten Datenstroms mit Bezug auf die mehreren Trägerfrequenzen, um einen Ausgangsdatenstrom zu erhalten.

11. Verfahren nach Anspruch 10, wobei eine Übertragungsfunktion, die auf die empfangenen akustischen Übertragungsdaten angewendet wird, modifiziert wird, um einen angepassten Eingangsdatenstrom bereitzustellen, so dass für jeden Signalabschnitt, der einen der Unterdatenströme repräsentiert, die gleiche Signalstärke erhalten wird.

## Revendications

1. Dispositif de réception acoustique (20) pour recevoir des données de transmission acoustiques multicanaux dans un système de transmission de données acoustiques, comprenant :
- un transducteur acoustique (21) ayant de multiples fréquences de résonance pour recevoir des données de transmission acoustiques contenant de multiples sous-flux de données, chacun modulé sur une fréquence porteuse respective et pour fournir un flux de données d'entrée ;
- un moyen d'appariement (26, 51) configuré pour réaliser une normalisation pour que les intensités de signal de chaque portion de signal représentant l'un des sous-flux de données dans le flux de données d'entrée soient rendues sensiblement égales pour une démodulation des multiples sous-flux de données ; et
- un moyen de traitement (24) du flux de données normalisé relativement aux multiples fréquences porteuses pour obtenir un flux de données de sortie.

2. Dispositif de réception acoustique (20) selon la revendication 1, dans lequel le transducteur acoustique (21) comprend un transducteur piézoélectrique ayant une résonance série et parallèle.

3. Dispositif de réception acoustique (20) selon la revendication 1 ou 2, dans lequel le moyen d'appariement (26) inclut un circuit d'appariement (26) qui est configuré pour modifier une fonction de transfert appliquée sur les données de transmission acoustiques reçues pour fournir un flux de données d'entrée apparié de sorte que pour chaque portion de signal représentant l'un des sous-flux de données, la même intensité de signal soit obtenue.

4. Dispositif de réception acoustique (20) selon la revendication 3, dans lequel le circuit d'appariement (26) comprend une résistance connectée en parallèle au transducteur acoustique (21).

5. Dispositif de réception acoustique (20) selon les revendications 1 à 4, dans lequel le circuit d'appariement (26) est en outre configuré pour que la fonction de transfert ait ses résonances aux multiples fréquences porteuses ou près de celles-ci.

6. Dispositif de réception acoustique (20) selon l'une quelconque des revendications 1 à 5, dans lequel le moyen de traitement (23, 24) comprend :
- un convertisseur analogique-numérique (23) pour fournir un flux de données d'entrée numérisé basé sur le flux de données d'entrée, et/ou
- une unité de traitement de récepteur (24) pour réaliser un décodage basé sur le flux de données d'entrée numérisé relativement aux multiples fréquences porteuses des données de transmission acoustiques pour obtenir le flux de données de sortie.

7. Dispositif de réception acoustique (20) selon la revendication 6, dans lequel le moyen d'appariement comprend un étage de normalisation pour une normalisation du flux de données d'entrée numérisé pour que l'intensité de signal de chaque sous-flux de données dans le flux de données d'entrée soit rendue sensiblement égale pour une démodulation des multiples sous-flux de données.

8. Dispositif de réception acoustique (20) selon l'une quelconque des revendications 1 à 7, dans lequel le moyen de traitement (23, 24) applique un schéma de démodulation qui inclut l'un parmi une modulation par déplacement de phase à quatre états avec détection différentielle (DQPSK), une modulation d'amplitude de quadrature (QAM) et une modulation par déplacement binaire de phase (BPSK).

9. Système de transmission de données acoustiques (1), comprenant :
- un dispositif de transmission acoustique (10) pour encoder un flux de données de transmission sur de multiples canaux, chacun associé à une fréquence porteuse unique et pour émettre des données de transmission acoustiques multicanaux contenant une pluralité de sous-signaux sonores de transmission superposés, chacun associé à un canal ;
- un dispositif de réception acoustique (20) selon l'une quelconque des revendications 1 à 8.

10. Procédé de traitement de données de transmission acoustiques multicanaux dans un dispositif de réception acoustique (20), comprenant les étapes de :
- réception de données de transmission acoustiques contenant de multiples sous-flux de données, chacun modulé sur une fréquence porteuse respective et fourniture d'un flux de données d'entrée au moyen d'un transducteur acoustique ayant de multiples fréquences de résonance ;
- réalisation d'une normalisation pour que les intensités de signal de chaque portion de signal représentant l'un des sous-flux de données dans le flux de données d'entrée soient rendues sensiblement égales pour une démodulation des multiples sous-flux de données ; et
- traitement du flux de données normalisé relativement aux multiples fréquences porteuses pour obtenir un flux de données de sortie.

11. Procédé selon la revendication 10, dans lequel une fonction de transfert appliquée sur les données de transmission acoustiques reçues est modifiée pour fournir un flux de données d'entrée apparié de sorte que pour chaque portion de signal représentant l'un des sous-flux de données, la même intensité de signal soit obtenue.
